# EUROPEAN PATENT SPECIFICATION

(11) **EP 4 336 419 B1**
(45) Date of publication and mention of the grant of the patent: **30.09.2026**
(21) Application number: 21946062.3
(22) Date of filing: 17.06.2021
(51) Int. Cl.: G06N 20/00, G06N 3/09, G06N 3/094

(54) **TRAINING DEVICE, TRAINING METHOD, AND TRAINING PROGRAM FOR TRAINING A MACHINE-LEARNING MODEL ROBUST TO ADVERSARIAL INPUTS**
TRAININGSVORRICHTUNG, TRAININGSVERFAHREN UND TRAININGSPROGRAMM ZUM TRAINIEREN EINES GEGENÜBER ADVERSARIALEN EINGABEN ROBUSTEN MASCHINELLEN LERNMODELLS
DISPOSITIF D'ENTRAÎNEMENT, PROCÉDÉ D'ENTRAÎNEMENT, ET PROGRAMME D'ENTRAÎNEMENT POUR ENTRAÎNER UN MODÈLE D'APPRENTISSAGE AUTOMATIQUE ROBUSTE AUX ENTRÉES ADVERSARIALES

(43) Date of publication of application: 13.03.2024
(73) Proprietor: NTT, Inc., Tokyo 100-8116 (JP)
(72) Inventor: YAMADA, Masanori, Musashino-shi, Tokyo 180-8585 (JP)
(74) Representative: Hoffmann Eitle
(86) International application number: PCT/JP2021/023123
(87) International publication number: WO 2022/264387

(56) References cited:
- DONGXIAN WU ET AL: "Adversarial Weight Perturbation Helps Robust Generalization", ARXIV.ORG, CORNELL UNIVERSITY LIBRARY, 201 OLIN LIBRARY CORNELL UNIVERSITY ITHACA, NY 14853, 13 October 2020 (2020-10-13), XP081784604, Retrieved from the Internet <URL:https://arxiv.org/abs/2004.05884>
- DONGXIAN WU; SHU-TAO XIA; YISEN WANG: "Adversarial Weight Perturbation Helps Robust Generalization", ARXIV.ORG, CORNELL UNIVERSITY LIBRARY, 201 OLIN LIBRARY CORNELL UNIVERSITY ITHACA, NY 14853, 13 October 2020 (2020-10-13), 201 Olin Library Cornell University Ithaca, NY 14853 , XP081784604
- TAKERU MIYATO, KOYAMA MASANORI, NAKAE KEN, ISHII SHIN: "Distributional smoothing with virtual adversarial training", ARXIV:1507.00677V4, 25 September 2015 (2015-09-25), XP055350332, Retrieved from the Internet <URL:https://arxiv.org/abs/1507.00677v4> [retrieved on 20170228]

## Description

### [Technical Field]

The present invention relates to a learning device, a learning method, and a learning program for a model.

### [Background Art]

In the related art, there are attacks such as an adversarial example in which erroneous determination is caused by a classifier by applying noise to classification target data. As countermeasures against an adversarial example, for example, there is adversarial training for learning a model (classifier) using the adversarial example.

However, the model learned in the adversarial training has a problem that the generalization performance is low. This is due to the fact that a loss landscape (the shape of a loss function) is sharpened to a weight of the model learned by the adversarial training. Accordingly, in order to flatten the loss landscape, there is a technique of adding noise (perturbation) to a weight in a direction in which a loss of a model is maximized.

### [Citation List]

### [Non Patent Literature]

[NPL 1] Diederik P. Kingma, Max Welling, "Auto-Encoding Variational Bayes," [retrieved on 4 June, 2021], the Internet: <URL: https://arxiv.org/pdf/1312.6114.pdf>
[NPL 2] Dongxian Wu, Shu-Tao Xia, Yisen Wang, "Adversarial Weight Perturbation Helps Robust Generalization," [retrieved on 4 June 2021], Internet <URL: https://arxiv.org/pdf/2004.05884>

### [Summary of Invention]

### [Technical Problem]

However, the foregoing technique has a problem that prediction performance for data with no noise deteriorates. Accordingly, a task of the present invention is to solve the foregoing problem and learn a method capable of predicting data with no noise with high accuracy while guaranteeing robustness against an adversarial example.

The object of the invention is solved by the subject matter of the independent claims. Advantageous embodiments of the invention are disclosed in the dependent claims. In order to solve the foregoing problem, a learning device according to an example includes: a data acquisition unit configured to acquire learning data of a model predicting a label of input data including an adversarial example; and a learning unit configured to perform learning of the model using a loss function that flattens a loss landscape with respect to a parameter by adding noise in which KL divergence of a loss value in the model becomes maximum to the parameter and learning data including the adversarial example when the noise is added to the parameter of the model and when the noise is not added.

### [Advantageous Effects of Invention]

According to the present invention, it is possible to learn a model capable of predicting data with no noise with high accuracy while guaranteeing robustness against an adversarial example.

### [Brief Description of Drawings]

[Fig. 1]

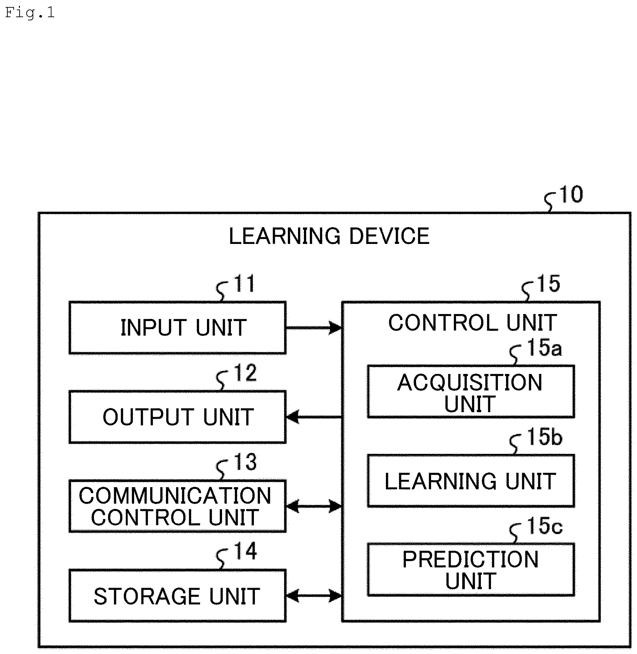

   Fig. 1 is a diagram illustrating an example of a configuration of a learning device.
[Fig. 2]

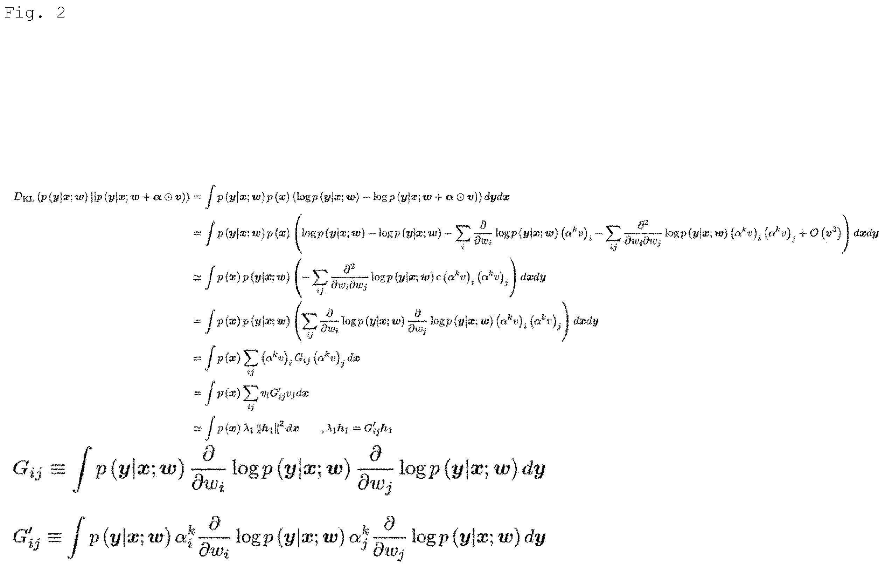

   Fig. 2 is a diagram illustrating an expression for describing the reason why an eigenvector h corresponding to a maximum eigenvalue λ of a Fisher information matrix G may be obtained to obtain MAX v in Expression (10).
[Fig. 3]

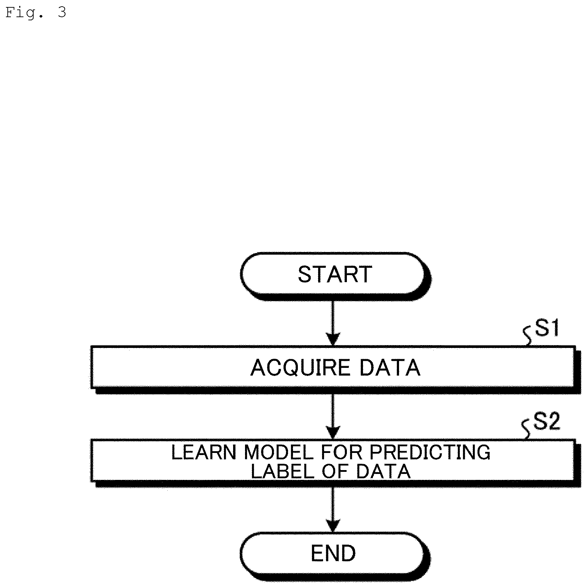

   Fig. 3 is a flowchart illustrating an example of a processing procedure of a learning device.
[Fig. 4]

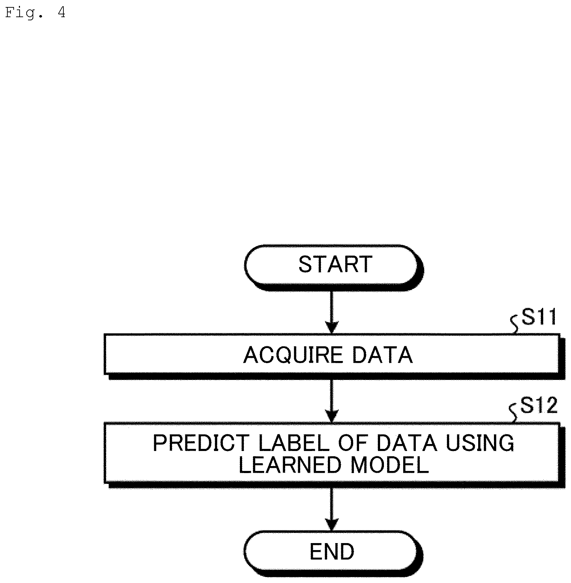

   Fig. 4 is a flowchart illustrating an example of a processing procedure of the learning device.
[Fig. 5]

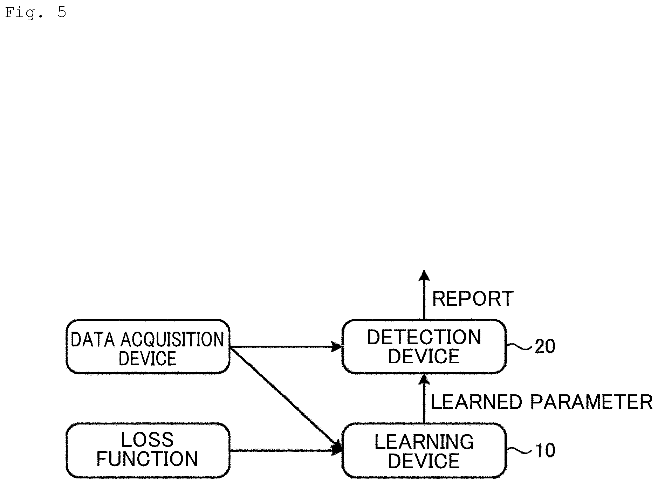

   Fig. 5 is a diagram illustrating an application example of a learning device.
[Fig. 6]

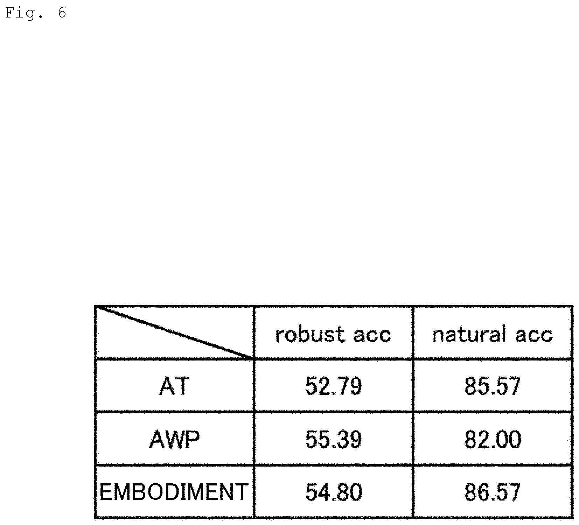

   Fig. 6 is a diagram illustrating an experiment result for a model learned by the learning device.
[Fig. 7]

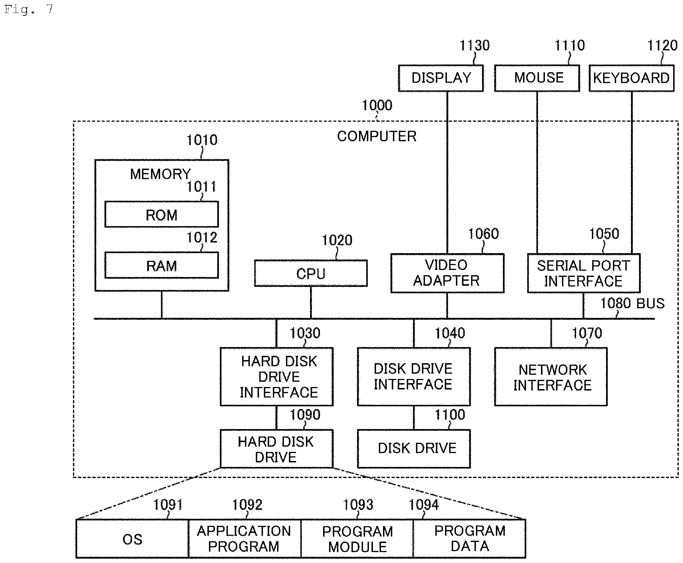

   Fig. 7 is a diagram illustrating an exemplary configuration of a computer that executes a learning program.

### [Description of Embodiments]

Hereinafter, a mode for carrying out the present invention (the present embodiment) will be described with reference to the drawings. The present invention is not limited to embodiments to be described below.

### [Overview of Learning device]

A learning device according to the embodiment executes a model of predicting a label of input data using data including an adversarial example (data to which noise is added). Here, the learning device uses a loss function that flattens a loss landscape with respect to a parameter by adding noise in which KL divergence of a loss value in the model becomes maximum to the parameter when the noise is added to the parameter of a model serving as a loss function used for learning a model and when the noise is not added.

Accordingly, the learning device can learn a model capable of predicting a label with high accuracy even for data with no noise while guaranteeing robustness against an adversarial example.

### [Exemplary Configuration of Learning Device]

An exemplary configuration of the learning device 10 will be described with reference to Fig. 1. The learning device 10 includes, for example, an input unit 11, an output unit 12, a communication control unit 13, a storage unit 14, and a control unit 15.

The input unit 11 is an interface that receives an input of various types of data. For example, the input unit 11 accepts an input of data used for learning processing and prediction processing to be described below. The output unit 12 is an interface that outputs various types of data. For example, the output unit 12 outputs a label of data predicted by the control unit 15.

The communication control unit 13 is implemented as a network interface card (NIC) or the like and controls communication with the control unit 15 and an external device such as a server via a network. For example, the communication control unit 13 controls communication between the control unit 15 and a management device which manages learning target data.

The storage unit 14 is implemented by a semiconductor memory device such as a random access memory (RAM) or a flash memory, or a storage device such as a hard disk or an optical disc, and stores a parameter and the like of a model learned by learning processing to be described below.

The control unit 15 is implemented, for example, using a central processing unit (CPU) or the like and executes a processing program stored in the storage unit 14. Accordingly, as exemplified in Fig. 1, the control unit 15 functions as an acquisition unit 15a, a learning unit 15b, and a prediction unit 15c.

The acquisition unit 15a acquires data used for learning processing and detection processing to be described below via the input unit 11 or the communication control unit 13.

The learning unit 15b learns a model predicting a label of input data by using data including an adversarial example as learning data. Here, the learning unit 15b uses, as a loss function used for learning of a model, a loss function that flattens a loss landscape with respect to a parameter by adding noise in which KL divergence of a loss value in the model becomes maximum to the parameter when the noise is added to the parameter of the model and when the noise is not added.

Here, a basic idea of the learning method of the model by the learning unit 15b will be described. For example, a learning target model is a model indicating a probability distribution of a label y of data x and is indicated by Expression (1) using a parameter θ. In Expression (1), f denotes a vector indicating a label output by the model.
[Math. 1] ${p}_{θ} \left(\left.{y}_{k}\right|x\right) = \frac{{expf}_{k} \left(x; θ\right)}{{\sum }_{i} {expf}_{i} \left(x; θ\right)}$

The learning unit 15b performs learning of the model by determining the parameter θ of the model such that a value of a loss function expressed in Expression (2) decreases.
[Math. 2] $l \left(x, y, θ\right) = p \left(\left.y\right|x\right) log {p}_{θ} \left(\left.y\right|x\right)$

Here, the learning unit 15b learns the model so that the label can be correctly predicted even for an adversarial example (see Expression (3)) in which the data x has noise η. That is, the learning unit 15b performs adversarial training expressed in Expression (4).
[Math. 3] ${max}_{η} {E}_{x , y ∼ p \left(x, y\right)} \left[l\left(x+η,y;θ\right)\right]$ [Math. 4] ${min}_{θ} \left({max}_{η}{E}_{x , y ∼ p \left(x, y\right)}\left[l\left(x+η,y;θ\right)\right]\right)$

Here, in the related art, there is a method of flattening a loss landscape with respect to a weight by adding noise (perturbation) to the weight (a parameter of the model) in order to improve generalization performance of the model in adversarial training (AT) of the model. The loss function in this method (adversarial weight perturbation (AWP)) is expressed by Expressions (5) and (6). Further, w (weight) is a parameter of a learning target model and corresponds to the foregoing θ. α is a coefficient for adjusting magnitude of noise (v), and its value is set to match a scale calculated from the Frobenius norm of w. That is, since the parameter has scale invariance, α has a role of absorbing a change in the scale.
[Math. 5] $ρ \left(w\right) = \frac{1}{N} {\sum }_{n}^{N} {max}_{{\left‖{x}_{n}^{′}-{x}_{n}\right‖}_{p} \leq ε} l \left({x}_{n}, {y}_{n}, w\right)$ [Math. 6] ${min}_{w} {max}_{υ} \left\{ρ\left(w\right)+ρ\left(w+α⊙υ\right)-ρ\left(w\right)\right\} = {min}_{w} {max}_{υ} ρ \left(w+α⊙υ\right)$
*α*: Coefficient adjusting magnitude of noise
*w*: Parameter of model
*v*: Noise for parameter of model
⊙: Hadamard product

Here, since it is desired to flatten a weight loss landscape visualized through filter normalization, α is defined as in the following Expression (7) so that noise (perturbation) in the scale of w for each filter is obtained. Here, k is an index of the filter.
[Math. 7] ${α}^{k} = \frac{\left‖{w}^{k}\right‖}{\left‖{∇}_{υ}ρ\left({w}^{k}+{υ}^{k}\right)\right‖}$

Accordingly, an updating expression for maximizing v is expressed as in Expression (8).
[Math. 8] $υ ← {\prod }_{γ} \left(υ+{η}_{2}α⊙{∇}_{υ}\frac{1}{N}{\sum }_{n} l \left({x}_{n}^{′},{y}_{n},w+υ\right)\right)$

In a previous study, it was confirmed that once is enough for the updating for maximizing the foregoing v. An updating expression of w is expressed as in the following Expression (9).
[Math. 9] $w ← w + υ - {η}_{3} {∇}_{υ + w} \frac{1}{N} {\sum }_{n} l \left({x}_{n}^{′},{y}_{n},w+υ\right) - υ$

Here, in the AWP, noise is added to w to maximize the loss value, but the learning unit 15b adds the noise to w to maximize KL divergence of a loss value. This loss function is expressed as in the following Expression (10). In Expression (10), ρ(w) corresponds to ρ(w) shown in Expression (5).
[Math. 10] $\begin{matrix}{min}_{w} {max}_{υ} \left\{ρ\left(w\right)+{D}_{KL}\left(\left.ρ\left(w\right)\right‖ρ\left(w+α⊙υ\right)\right)\right\} \\ {α}^{k} = \frac{\left‖{w}^{k}\right‖}{\left‖{υ}_{KL}\right‖} = \left‖{w}^{k}\right‖\end{matrix}$ *v_{KL}*: Noise produced to maximize KL divergence

In order to obtain MAX v in Expression (10), an eigenvector h corresponding to a maximum eigenvalue λ of a Fisher information matrix G may be obtained. An expression that explains this is expressed in Fig. 2.

Accordingly, an updating expression for maximizing v is expressed as in Expression (11).
[Math. 11] $v ← {\prod }_{γ} \left(v+{η}_{2}{h}_{1}\right)$

Since the Fisher information matrix is huge, it takes too much time to divide eigenvalues into negative numbers. Therefore, the maximum eigenvalue is calculated, for example, using power iteration. When the Fisher information matrix is calculated, it is necessary to calculate the following. $\frac{\partial }{\partial w} {logp}_{θ} \left(\left.y\right|x\right)$

However, this dimension of the output is larger than that of an input. Therefore, the calculation efficiency is not good when back procedure used in ordinary deep learning is used. Therefore, it is desired to calculate a gradient in forward propagation, but a mode of the forward propagation is not prepared in an existing deep learning library such as Pytorch. Therefore, forward propagation is implemented using the ROP trick disclosed in the following literature 1.

(Literature 1) [Adding functionality] Hessian and Fisher Information vector products, https:// discuss.pytorch.org/t/adding-functionality-hessian-and-fisher-information-vector-products/23295/2

The learning unit 15b learns a model for predicting a label of input data using learning data including an adversarial example and the loss function. That is, the learning unit 15b obtains the parameter θ of a model for minimizing a loss calculated by the foregoing loss function using the learning data.

The prediction unit 15c predicts the label of the input data using the learned model. For example, the prediction unit 15c calculate a probability of each label of newly acquired data by applying the learned parameter θ to Expression (1) and outputs the label with the highest probability. Accordingly, the learning device 10 can output a correct label, for example, even when the input data is an adversarial example.

### [Learning Processing]

Next, an example of a learning processing procedure by the learning device 10 according to the present embodiment will be described with reference to Fig. 3. The processing illustrated in Fig. 3 starts at a timing at which an input operation of giving an instruction to start the learning processing is performed.

First, the acquisition unit 15a acquires learning data including an adversarial example (S1). Then, the learning unit 15b learns a model indicating a probability distribution of the label of the input data using the learning data and the loss function (S2). As described above, the loss function is a loss function that flattens a loss landscape with respect to a parameter by adding noise in which KL divergence of a loss value in the model becomes maximum to the parameter when the noise is added to the parameter of the model and when the noise is not added. The learning unit 15b stores the parameter of the model learned in S2 in the storage unit 14.

### [Prediction Processing]

Next, an example of prediction processing of the label of the input data by the learning device 10 will be described with reference to Fig. 4. The processing illustrated in Fig. 4 starts, for example, at a timing at which an input operation of giving an instruction to start the prediction processing is performed.

First, the acquisition unit 15a acquires data of a label prediction target (S11). Subsequently, the prediction unit 15c predicts the label of the data acquired in S11 using the model learned by the learning unit 15b (S12). For example, the prediction unit 15c calculates p (x') of data x' acquired in S11 by applying the learned parameter θ to Expression (1) and outputs a label with the highest probability. Thus, for example, even when the data x is an adversarial example, the learning device 10 can output a correct label.

### [Learning Device]

The learning device 10 may be applied to data abnormality detection. An application example of this case will be described with reference to Fig. 5. Here, a case where the function of the prediction unit 15c is installed in the detection device 20 will be described as an example.

For example, the learning device 10 performs model learning (adversarial training) using teacher data (learning data) acquired from a data acquisition device and the loss function. After that, when acquiring new data x from the data acquisition device, the detection device 20 calculates p (x') of the data x by using the learned model. Then, the detection device 20 outputs a report regarding whether the data x is abnormal data or not on the basis of the label having the highest probability.

### [Experimental Result]

Next, a result of an evaluation experiment for prediction accuracy of a label by the model learned by the learning device 10 according to the embodiment is illustrated in Fig. 6. In the experiment, robust acc and natural acc were evaluated for the model learned by the learning device 10 according to the embodiment.

Here, robust acc is a value indicating classification accuracy (prediction accuracy of the label of the data) of data with adversarial example. Further, natural acc is a value indicating classification accuracy of data with no noise. Both robust acc and natural acc take a value of 0 to 100. Comparison targets are a model learned by AT and a model a model learned by AWP. Experiment conditions are as follows.
Data set of images: Cifar10
Deep learning model: Resnet18
Adversarial Example: PGD
Parameters of PGD: eps=8/255, train_iter=7, eval_iter=20, eps_iter=0.01, rand_init=True, clip_min=0.0, clip_max=1.0

As illustrated in Fig. 6, the model learned by the learning device 10 has higher values of robust acc and natural acc than those of a model learned by AT. The model learned by the learning device 10 according to the embodiment has a slightly lower value of robust acc and a considerably higher value of natural acc than those of the model learned by AWP.

Accordingly, it has been confirmed that the model learned by the learning device 10 is a model capable of accurately predicting even data with no noise while guaranteeing robustness against the adversarial example.

### [System Configuration or the Like]

Each constituent of each of the illustrated units is simply functionally conceptual and need not necessarily be physically configured as illustrated in the drawings. That is, specific forms of distribution and integration of each device are not limited to the form illustrated in the drawings, and some or all of the forms be functionally or physically distributed or integrated in any unit depending on various loads, usage situations, or the like. Further, some or all of the units of each processing function performed in each device can be implemented by a CPU and a program executed by the CPU, or can be implemented as hardware by a wired logic.

Of the types of processing described in the foregoing embodiment, some or all of the types of processing described as being automatically executed may also be manually executed, or some or all of the types of processing described as being manually executed may also be automatically executed in accordance with a known method. In addition, processing procedures, control procedures, specific names, information including various types of data and parameters that are illustrated in the above literatures and drawings may be arbitrarily changed unless otherwise mentioned.

### [Program]

The foregoing learning device 10 can be implemented by installing a program as package software or on-line software in a desired computer. For example, by causing an information processing device to execute the foregoing program, the information processing device can be caused to function as the learning device 10. The information processing device mentioned here includes a desktop or laptop personal computer. In addition, the information processing device includes a mobile communication terminal such as a smartphone, a mobile phone, and a personal handyphone system (PHS) and a terminal such as a personal digital assistant (PDA) in the category.

The learning device 10 can also be implemented as a server device that uses a terminal device used by a user as a client and provides services related to the foregoing processing to the client. In this case, the server device may be implemented as a web server or may be implemented as a cloud that provides services related to the foregoing processes by outsourcing.

Fig. 7 is a diagram illustrating an example of a computer that executes a learning program. A computer 1000 includes, for example, a memory 1010 and a CPU 1020. The computer 1000 also includes a hard disk drive interface 1030, a disk drive interface 1040, a serial port interface 1050, a video adapter 1060, and a network interface 1070. These units are connected to each other via a bus 1080.

The memory 1010 includes a read only memory (ROM) 1011 and a random access memory (RAM) 1012. The ROM 1011 stores, for example, a boot program such as a Basic Input Output System (BIOS). The hard disk drive interface 1030 is connected to the hard disk drive 1090. The disk drive interface 1040 is connected to a disk drive 1100. For example, a removable storage medium such as a magnetic disk or an optical disc is inserted into the disk drive 1100. The serial port interface 1050 is connected to, for example, a mouse 1110 and a keyboard 1120. The video adapter 1060 is connected to, for example, a display 1130.

The hard disk drive 1090 stores, for example, an OS 1091, an application program 1092, a program module 1093, and program data 1094. That is, a program defining each processing executed by the foregoing learning device 10 is mounted as the program module 1093 in which codes that can be executed by a computer are described. The program module 1093 is stored in, for example, the hard disk drive 1090. For example, the program module 1093 executing similar processing to the functional configuration of the learning device 10 is stored in the hard disk drive 1090. The hard disk drive 1090 may be replaced with a solid-state drive (SSD).

Data used for the processing of the above-described embodiment is stored, for example, in the memory 1010 or the hard disk drive 1090 as the program data 1094. The CPU 1020 reads the program module 1093 and the program data 1094 stored in the memory 1010 or the hard disk drive 1090 onto the RAM 1012 and executes them as necessary.

The program module 1093 and the program data 1094 are not limited to being stored in the hard disk drive 1090 and may also be stored in, for example, a removable storage medium and may be read out by the CPU 1020 via the disk drive 1100 or the like. Alternatively, the program module 1093 and the program data 1094 may be stored in another computer connected via a network (a local area network (LAN)), a wide area network (WAN), or the like). The program module 1093 and the program data 1094 may be read by the CPU 1020 from the other computer via the network interface 1070.

### [Reference Signs List]

- 10: Learning device
- 11: Input unit
- 12: Output unit
- 13: Communication control unit
- 14: Storage unit
- 15: Control unit
- 15a: Acquisition unit
- 15b: Learning unit
- 15c: Prediction unit
- 20: Detection device

## Claims

1. A learning device (10) comprising:
a data acquisition unit (15a) configured to acquire learning data comprising images for a model predicting a label of input image, the learning data including an adversarial example; and
a learning unit (15b) configured to perform learning of the model using the learning data, **characterized by**
the learning of the model in the learning unit includes determining a weight (ω) of the model by solving an optimization problem expressed as: $mi {n}_{w} ma {x}_{v} \left\{ρ\left(w\right)+{D}_{KL}\left(\left.ρ\left(w\right)\right‖ρ\left(w+α⊙v\right)\right)\right\}$
where: p(w) is a loss function of the model with respect to the weight (ω); υ is noise added to the weight (ω); D_{KL} is KL divergence; ⊙ denotes a Hadamard product; and α is a coefficient defined for a filter k of the model as α^{k} = | |ω^{k}| |, where | |ω^{k}| | is the norm of the weight (ω^{k}) of the filter k.

2. The learning device (10) according to claim 1, further comprising:
a prediction unit (15c) configured to predict the label of the input data using the learned model.

3. A learning method executed by a learning device (10), the method comprising:
acquiring learning data comprising images for a model predicting a label of input images, the learning data including an adversarial example; and
performing learning of the model using the learning data, **characterised by**
the learning of the model in the learning unit including determining a weight (ω) of the model by solving an optimization problem expressed as: $mi {n}_{w} ma {x}_{v} \left\{ρ\left(w\right)+{D}_{KL}\left(\left.ρ\left(w\right)\right‖ρ\left(w+α⊙v\right)\right)\right\}$
where: p(w) is a loss function of the model with respect to the weight (ω); υ is noise added to the weight (ω); D_{KL} is KL divergence; ⊙ denotes a Hadamard product; and α is a coefficient defined for a filter k of the model as α^{k} = | |ω^{k}| | |, where ||ω^{k}|| is the norm of the weight (ω^{k}) of the filter k.

4. A learning program causing a computer to execute:
acquiring learning data comprising images for a model predicting a label of input images, the learning data including an adversarial example; and
performing learning of the model using the learning data **characterised by**
the learning of the model in the learning unit including determining a weight (ω) of the model by solving an optimization problem expressed as: $mi {n}_{w} ma {x}_{v} \left\{ρ\left(w\right)+{D}_{KL}\left(\left.ρ\left(w\right)\right‖ρ\left(w+α⊙v\right)\right)\right\}$
where: p(w) is a loss function of the model with respect to the weight (ω); υ is noise added to the weight (ω); D_{KL} is KL divergence; ⊙ denotes a Hadamard product; and α is a coefficient defined for a filter k of the model as α^{k} = | |ω^{k}| | |, where ||ω^{k}|| is the norm of the weight (ω^{k}) of the filter k.

## Patentansprüche

1. Lernvorrichtung (10), umfassend:
eine Datenerfassungseinheit (15a), die konfiguriert ist, Lerndaten zu erfassen, die Bilder für ein Modell umfassen, das ein Label eines Eingabebildes vorhersagt, wobei die Lerndaten ein adversariales Beispiel einschließen; und
eine Lerneinheit (15b), die konfiguriert ist, ein Lernen des Modells unter Verwendung der Lerndaten durchzuführen, **dadurch gekennzeichnet, dass**
das Lernen des Modells in der Lerneinheit das Bestimmen eines Gewichts (w) des Modells durch Lösen eines wie folgt ausgedrückten Optimierungsproblems einschließt: $mi {n}_{w} ma {x}_{v} \left\{ρ\left(w\right)+{D}_{KL}\left(\left.ρ\left(w\right)\right‖ρ\left(w+α⊙v\right)\right)\right\}$
wobei: p(w) eine Verlustfunktion des Modells in Bezug auf das Gewicht (w) ist; u dem Gewicht (w) hinzugefügtes Rauschen ist; D_{KL} die KL-Divergenz ist; ⊙ ein Hadamard-Produkt bezeichnet; und α ein Koeffizient ist, der für einen Filter k des Modells definiert ist als α^{k} = | |ω^{k}| |, wobei | |ω^{k}| | die Norm des Gewichts (ω^{k}) des Filters k ist.

2. Lernvorrichtung (10) nach Anspruch 1, weiter umfassend:
eine Vorhersageeinheit (15c), die konfiguriert ist, das Label der Eingabedaten unter Verwendung des gelernten Modells vorherzusagen.

3. Lernverfahren, das durch eine Lernvorrichtung (10) ausgeführt wird, wobei das Verfahren umfasst:
Erfassen von Lerndaten, die Bilder für ein Modell umfassen, das ein Label von Eingabebildern vorhersagt, wobei die Lerndaten ein adversariales Beispiel einschließen; und
Durchführen eines Lernens des Modells unter Verwendung der Lerndaten, **dadurch gekennzeichnet, dass**
das Lernen des Modells in der Lerneinheit das Bestimmen eines Gewichts (w) des Modells durch Lösen eines wie folgt ausgedrückten Optimierungsproblems einschließt: $mi {n}_{w} ma {x}_{v} \left\{ρ\left(w\right)+{D}_{KL}\left(\left.ρ\left(w\right)\right‖ρ\left(w+α⊙v\right)\right)\right\}$
wobei: p(w) eine Verlustfunktion des Modells in Bezug auf das Gewicht (w) ist; u dem Gewicht (w) hinzugefügtes Rauschen ist; D_{KL} die KL-Divergenz ist; ⊙ ein Hadamard-Produkt bezeichnet; und α ein Koeffizient ist, der für einen Filter k des Modells definiert ist als α^{k} = | |ω^{k}||, wobei | |ω^{k}| | die Norm des Gewichts (ω^{k}) des Filters k ist.

4. Lernprogramm, das einen Computer veranlasst, Folgendes auszuführen:
Erfassen von Lerndaten, die Bilder für ein Modell umfassen, das ein Label von Eingabebildern vorhersagt, wobei die Lerndaten ein adversariales Beispiel einschließen; und
Durchführen eines Lernens des Modells unter Verwendung der Lerndaten, **dadurch gekennzeichnet, dass**
das Lernen des Modells in der Lerneinheit das Bestimmen eines Gewichts (w) des Modells durch Lösen eines wie folgt ausgedrückten Optimierungsproblems einschließt: $mi {n}_{w} ma {x}_{v} \left\{ρ\left(w\right)+{D}_{KL}\left(\left.ρ\left(w\right)\right‖ρ\left(w+α⊙v\right)\right)\right\}$
wobei: p(w) eine Verlustfunktion des Modells in Bezug auf das Gewicht (w) ist; u dem Gewicht (w) hinzugefügtes Rauschen ist; D_{KL} die KL-Divergenz ist; ⊙ ein Hadamard-Produkt bezeichnet; und α ein Koeffizient ist, der für einen Filter k des Modells definiert ist als α^{k} = | |ω^{k}| |, wobei | |ω^{k}| | die Norm des Gewichts (ω^{k}) des Filters k ist.

## Revendications

1. Dispositif d'apprentissage (10) comprenant :
une unité (15a) d'acquisition de données configurée pour acquérir des données d'apprentissage comprenant des images pour un modèle prédisant une étiquette d'image d'entrée, les données d'apprentissage incluant un exemple contradictoire ; et
une unité d'apprentissage (15b) configurée pour réaliser l'apprentissage du modèle à l'aide des données d'apprentissage, **caractérisé en ce que**
l'apprentissage du modèle dans l'unité d'apprentissage inclut la détermination d'un poids (ω) du modèle par résolution d'un problème d'optimisation exprimé comme suit : $mi {n}_{w} ma {x}_{v} \left\{ρ\left(w\right)+{D}_{KL}\left(\left.ρ\left(w\right)\right‖ρ\left(w+α⊙v\right)\right)\right\}$
où : p(w) est une fonction de perte du modèle par rapport au poids (ω) ; u est un bruit ajouté au poids (w) ; D_{KL} est une divergence de Kullback-Leibler ; ⊙ désigne un produit de Hadamard ; et α est un coefficient défini pour un filtre k du modèle comme α^{k} = | |ω^{k}| |, où | |ω^{k}| | est la norme du poids (ω^{k}) du filtre k.

2. Dispositif d'apprentissage (10) selon la revendication 1, comprenant en outre :
une unité de prédiction (15c) configurée pour prédire l'étiquette des données d'entrée à l'aide du modèle appris.

3. Procédé d'apprentissage mis en œuvre par un dispositif d'apprentissage (10), le procédé comprenant :
l'acquisition de données d'apprentissage comprenant des images pour un modèle prédisant une étiquette d'images d'entrée, les données d'apprentissage incluant un exemple contradictoire ;
et
la réalisation de l'apprentissage du modèle à l'aide des données d'apprentissage,
**caractérisé par**
l'apprentissage du modèle dans l'unité d'apprentissage incluant la détermination d'un poids (ω) du modèle par résolution d'un problème d'optimisation exprimé comme suit : $mi {n}_{w} ma {x}_{v} \left\{ρ\left(w\right)+{D}_{KL}\left(\left.ρ\left(w\right)\right‖ρ\left(w+α⊙v\right)\right)\right\}$
où : p(w) est une fonction de perte du modèle par rapport au poids (ω) ; u est un bruit ajouté au poids (w) ; D_{KL} est une divergence de Kullback-Leibler ; ⊙ désigne un produit de Hadamard ; et α est un coefficient défini pour un filtre k du modèle comme α^{k} = | |ω^{k}| |, où | |ω^{k}| | est la norme du poids (ω^{k}) du filtre k.

4. Programme d'apprentissage amenant un ordinateur à mettre en œuvre :
l'acquisition de données d'apprentissage comprenant des images pour un modèle prédisant une étiquette d'images d'entrée, les données d'apprentissage incluant un exemple contradictoire ; et
la réalisation de l'apprentissage du modèle à l'aide des données d'apprentissage **caractérisé par**
l'apprentissage du modèle dans l'unité d'apprentissage incluant la détermination d'un poids (ω) du modèle par résolution d'un problème d'optimisation exprimé comme suit : $mi {n}_{w} ma {x}_{v} \left\{ρ\left(w\right)+{D}_{KL}\left(ρ\left(w\right)\left‖ρ\left(w+α⊙v\right)\right.\right)\right\}$
où : p(w) est une fonction de perte du modèle par rapport au poids (ω) ; u est un bruit ajouté au poids (w) ; D_{KL} est une divergence de Kullback-Leibler ; ⊙ désigne un produit de Hadamard ; et α est un coefficient défini pour un filtre k du modèle comme α^{k} = | |ω^{k}| |, où | |ω^{k}| | est la norme du poids (ω^{k}) du filtre k.
